Europäisches Patentamt

European Patent Office

Office européen des brevets

(19)

(11) Veröffentlichungsnummer: **0 170 862**
**B1**

(12) **EUROPÄISCHE PATENTSCHRIFT**

(45) Veröffentlichungstag der Patentschrift:
07.06.89

(21) Anmeldenummer: 85107964.0

(22) Anmeldetag: 27.06.85

(51) Int. Cl.⁴: **A 62 D 3/00**, B 09 B 5/00,
F 23 G 5/027

(54) Verfahren und Anlage zur Wiedernutzbarmachung industriell genutzter, bodenverunreinigter Grundstücke.

(30) Priorität: 26.07.84 DE 3427532

(43) Veröffentlichungstag der Anmeldung:
12.02.86 Patentblatt 86/07

(45) Bekanntmachung des Hinweises auf die Patenterteilung: 07.06.89 Patentblatt 89/23

(84) Benannte Vertragsstaaten:
BE FR GB NL

(56) Entgegenhaltungen:
DE–A– 1 247 532
DE–A– 3 122 395
DE–A– 3 216 771
US–A– 3 616 204
US–A– 4 401 569

(73) Patentinhaber: RUHRKOHLE AKTIENGESELLS-CHAFT
Rellinghauser Strasse 1 Postfach 10 32 62
D-4300 Essen 1 (DE)

(72) Erfinder: Staender, Ludwig, Dipl.-Ing.
Ernst-Tengelmann-Ring 11 B
D-4300 Essen 15 (DE)

EP 0 170 862 B1

Jouve, 18, rue St-Denis, 75001 Paris, France

**Beschreibung**

Die Erfindung betrifft ein Verfahren und eine Anlage zur Wiedernutzbarmachung von insbesondere ehemals industriell genutzten Grundstücken, deren Boden durch Ablagerungen, Betriebsunfälle oder sonstige Schadensfälle mit Kohlenwasserstoffverbindungen kontaminiert ist, wobei die kontaminierten Bodenmassen ausgehoben und die Umwelt nicht belastend verwertet werden.

Ehemals industriell genutzte Grundstücke weisen neben in den Böden verbliebenen Bauresten nicht selten auch chemische Bodenverunreinigungen auf. Während die Baureste in der Regel mit entsprechendem Aufwand bei Wiedernutzbarmachung der Grundstücke entfernt werden können, ist die Entfernung der chemischen Bodenverunreinigungen praktisch bisher ungelöst. Die Bodenverunreinigungen sind auf früher zulässige Ablagerungen, auf Kriegsbeschädigungen sowie Betriebsunfälle oder auch fehlderhafte Betriebsführung zurückzuführen. Dabei haben sich beispielsweise die wasserlöslichen Kohlenwasserstoffe durch die witterungsbedingten Einflüsse von dem ursprünglichen Ablagerungsort häufig über größere Distanzen entfernt. Man findet daher stark kontaminierte Bodenmassen und durch die vor allem wassergelösten Kohlenwasserstoffe kontaminierten Bodenmassen vor. Derart durch Bodenverunreinigungen belastete Grundstücke finden sich häufig im Stadtbereich und verhindern eine Wiederverwendung, vorwiegend im Rahmen der baulichen Nutzung und stellen darüber hinaus häufig eine Grundwassergefährdung dar, weil die wasserlöslichen Kohlenwasserstoffe eben über das Grundwasser auch in andere Bereiche vordringen. Um diese Grundstücke beispielsweise für Siedlungszwecke wieder zur Verfügung stellen zu können, hat man bisher die kontaminierten Bodenmassen ausgehoben und auf Sondermülldeponien verbracht. Die ausgehobenen Bodenmassen müssen dann durch Humusboden ersetzt werden, wodurch derartige Maßnahmen kostenmäßig erheblich belastet sind, zumal die Sondermülldeponien nur im geringem Umfang zur Verfügung stehen und darüber hinaus meist nur über lange Transportwege zu erreichen sind. Abgesehen davon, daß diese Maßnahmen sehr kosten- und zeitaufwendig sind, ist es schwierig, mit diesen Maßnahmen wirklich alle kontaminierten Bodenbereiche zu erfassen und umweltneutral abzulagern. Theoretisch besteht zwar auch die Möglichkeit, die kontaminierten Bodenmassen so abzudämmen, daß das darin enthaltene Schadstoffmaterial nicht in andere Bereiche entweichen kann. Dann ist aber eine vernünftige Nutzung derartiger Grundstücke unmöglich gemacht, wobei die bekannten Abdämmungsmethoden darüber hinaus über lange Zeit als nicht sicher angesehen werden müssen.

Der Erfindung liegt die Aufgabe zugrunde, ein Verfahren und eine Anlage zu schaffen, über die im Grundstück verbliebene vorzugsweise teer- und mineralölstämmige Rückstände an Ort und Stelle wirksam beseitigt werden können, so daß die Grundwassergefährdung beseitigt bzw. das Grundwasser regeneriert wird und das Grundstück vor allem für Siedlungszwecke wieder nutzbar ist.

Aus dem Stand der Technik, insbesondere DE-A-3 216 771 und US-A-4 401 569 sind zwar einerseits thermische Verfahren zur Wiederaufarbeitung von mit Kohlenwasserstoffen kontaminierten Böden, bei denen das kontaminierte Gut auf etwa 400 °C erwärmt wird und die gebildeten Ausgasungsprodukte anschließend bei höheren Temperaturen (400-1 000 °C) verbrannt werden und andererseits mikrobiologische Verfahren, bei denen ein mit Kohlenwasserstoff verseuchter Boden mit einer Nährlösung für Kohlenwasserstoffe abbauende Mikroorganismen behandelt wird, bekannt. Dem Stand der Technik sind aber keine Kombinationen dieser Verfahren zu entnehmen.

Die Aufgabe wird erfindungsgemäß dadurch gelöst, daß gezielt die stark kontaminierten Bodenmassen zusammen mit noch vorhandenen Ablagerungen ausgehoben, am Ort durchgeglüht und dann abgekühlt, wieder eingebracht und rekultiviert werden und daß die Restkontaminationen und im Grundwasser gelösten Kohlenwasserstoffe am Ort verbleibend mit Wachstumsfaktoren kontaktiert werden, die Kohlenwasserstoffe abbauende Mikroorganismen zur Vermehrung anregen.

Ein derartiges Verfahren zur Wiedernutzbarmachung von Bodenverunreinigungen aufweisenden Grundstücken ermöglicht es, ohne aufwendige Transport- und Unterbringungsmaßnahmen das Grundstück im wahren Sinne des Wortes wieder nutzbar zu machen. Hierzu macht sich das Verfahren die Tatsache zunutze, daß auch in dem verseuchten Boden Mikroorganismen vorhanden sind, die Kohlenwasserstoffe und ggf. auch andere Schadstoffe abbauen können bzw. die geeignet sind, auch totgebrannten Boden zu rekultivieren. Damit ist es möglich, in erstaunlich kurzer Zeit auch stark verseuchten Boden von den schädlichen Verunreinigungen zu befreien. Der große Vorteil ist dabei darin zu sehen, daß das erfindungsgemäße Verfahren ohne nennenswerte Umweltbeeinträchtigung durchgeführt werden kann. Die Kombination der Durchglühens der stark kontaminierten Bodenmassen und der mikrobiologischen Behandlung der weniger stark kontaminierten Bodenmassen ermöglicht es in der schon erwähnten verhältnismäßig kurzen Zeit auch wirklich alle Bereiche von den vorhandenen Verunreinigungen wirksam zu befreien.

Die Verteilung der stark kontaminierten Bodenmassen kann in sich unterschiedlich sein. Um dennoch eine gleichmäßige Durchglühung zu gewährleisten und andererseits eine direkte Beheizung zu ermöglichen, ist erfindungsgemäß vorgesehen, daß die stark kontaminierten Bodenmassen mit Ballastkohle gemischt und dann durchgeglüht werden. Die Verwendung von Ballastkohle hat dabei den Vorteil, daß ein derartiger Brennstoff verhältnismäßig preisgünstig ist und darüberhinaus einen hohen Ascheanfall hat, so daß durch den Brennvorgang entstehende Massendefizit zum Teil bereits ausgeglichen wird. Im übrigen ist so eine Eingrenzung der Energiekosten möglich, da die in den kontaminierten Bodenmassen vorhandene Energie sicher und vollständig mit ausgenutzt werden kann.

Um alle in den kontaminierten Bodenmassen abgelagerten Schadstoffe, insbesondere die teerhaltigen Ablagerungen wirksam auszuglühen, ist es notwendig, die Bodenmassen bei 600 bis 800 °C, vorzugsweise 700 °C durchzuglühen und dann die freigesetzten Rauchgase anschließend, vorzugsweise bei 1 200 °C nachzuverbrennen. Damit werden schadstoffreie Abgase in die Atmosphäre abgelassen, so daß eine Beeinträchtigung der Umwelt hierdurch nicht eintritt. Damit ist es vorteilhaft möglich, das erfindungsgemäße Verfahren auch innerhalb des Stadtgebietes, wo wie erwähnt häufig derartige Grundstücke liegen, einzusetzen.

Die für die Rekultivierung der Bodenmassen benötigten Bodenmikroorganismen entwickeln sich bei bestimmten Temperaturen besonders schnell, so daß diese Entwicklung erfindungsgemäß dadurch gezielt begünstigt wird, daß die durchgeglühten Bodenmassen abgekühlt und dann noch warm wieder eingebracht werden, wobei das durch das Durchglühen eingetretene Massendefizit mit Bergematerial ersetzt wird. Damit wird nach dem Durchglühen das Grundstück wieder vollständig aufgefüllt, so daß es nach entsprechender Rekultivierung der durchglühten Massen für Siedlungszwecke in optimaler Form wieder zur Verfügung steht.

Nach einer weiteren Ausbildung des erfindungsgemäßen Verfahrens wird die Rekultivierung dadurch optimiert, daß den durchglühten Bodenmassen beim Wiedereinbringen oder danach den Boden wiederbelebende Mikroorganismen zugegeben werden. Dabei ist es auch möglich, die durchglühten Massen in einem bestimmten Raster in das Grundstück so einzubringen, daß jeweils nur verhältnismäßig schmale Bereiche wiederzubelebenden Bodens vorhanden sind. Auf diese Weise kann die Rekultivierungszeit verkürzt werden, ohne daß die dafür notwendigen Maßnahmen eine wesentliche Belastung des Verfahrens darstellen.

Bekannterweise spielen Mikroorganismen im Kreislauf des Kohlenstoffs eine wichtige Rolle. Kohlenstoffverbindungen können über Mikroorganismen ab- oder umgebaut werden, wobei verschiedene Arten von Mikroorganismen bekannt sind, die besser aromatische oder aliphatische Kohlenwasserstoffe abbauen bzw. umwandeln. Derartige Mikroorganismen sind in den kontaminierten Bodenmassen vorhanden, so daß an sich in entsprechend großen Zeiträumen die geschilderten Schadstoffe abgebaut werden würden. Dieser Zeitraum wird nun erfindungsgemäß dadurch gezielt verkürzt, daß nach dem Ausheben der stark kontaminierten Bodenmassen in den Restkontaminationen und im Grundwasser gelösten Kohlenwasserstoffe durch Berieseln bzw. Verdüsen und/oder Wassereinpressen mit beigegebenen Wachstumsfaktoren eingabeseitig und kontrollseitig überwacht die Mineralisation der Kohlenwasserstoffe bewirkende Mikroorganismen belebt und gezüchtet werden. Auf diese Weise kann die Zeit, in der die im Boden vorhandenen Kohlenwasserstoffverbindungen ab- oder umgebaut werden, so verkürzt werden, daß die Grundstücke in vertretbarer Zeit für Siedlungsu. a. Zwecke wieder zur Verfügung gestellt werden können. Bei entsprechender Berieselung, Verdüsung oder Wassereinpressung kann je nach Größenordnung der stark kontaminierten Bodenmassen das gesamte Verfahren so abgewickelt werden, daß schon nach wenigen Wochen oder Monaten ein wiederverwendbares Grundstück zur Verfügung steht. Je nach Beschaffenheit des Bodens kann nach dem erfindungsgemäßen Verfahren die Wachstumsfaktoreneingabe so variiert werden, daß auch wirklich alle Bodenbereiche gleichmäßig so kontaktiert werden, daß die vorhandenen oder eingeschleusten Mikroorganismen belebt und zur Population angestiftet werden.

In den Bereichen, in denen Mikroorganismen nicht schnell genug gezüchtet und vermehrt werden können oder in denen sogar entsprechende Mikroorganismen nicht vorhanden sind, ist es vortielhaft, diese nesterweise in die kontaminierten Bodenmassen vorzugsweise über Bohrungen einzubringen und dann zu aktivieren. Damit ist es möglich, auch gezielt bestimmte Bodenbereiche schneller als die übrigen zu reinigen, beispielsweise um das weitere Eindringen von verunreinigtem Wasser in andere Bodenbereiche zu unterbinden, indem ein Schutzbereich um die übrigen kontaminierten Bodenmassen gelegt wird.

Um die Belebung und Züchtung der Mikroorganismen zu beeinflussen, ist die Einleitung von sauerstoffhaltigem Wasser vorgesehen. Dabei ist es besonders vorteilhaft, dem Wasser zusätzlich Sauerstoffträger, vorzugsweise Nitrat sowie geringe Mengen an Ammonium und Phosphat zuzugeben. Über das Ammonium und das Phosphat ist eine vollständige Reduzierung des Nitrates zu Stickstoff gewährleistet. Ohne diese Faktoren wäre unter Umständen die Bildung weiterer nachteiliger Stoffe nicht zu vermeiden.

Die die Kohlenwasserstoffe abbauenden bzw. umwandelnden Mikroorganismen entwickeln sich besonders gut bei bestimmten Temperaturen. Diese Tatsache macht das erfindungsgemäße Verfahren dadurch zu Nutze, daß das benötigte Wasser jeweils auf einer gleichbleibenden Temperatur gehalten wird, was besonders gut bei dem erfindungsgemäß kombinierten Verfahren möglich ist, da Abwärme zur Aufwärmung des für die Berieselung, Verdüsung und Einpressung vorgesehenen Wassers zur Verfügung steht.

Zur Durchführung des Verfahrens dient eine Anlage, die neben den Einrichtungen zum Durchglühen der stark kontaminierten Bodenmassen aus der Wasserbeschichtungseinrichtung für die weniger stark kontaminierten Bodenmassen besteht. Dabei sind einem Drehrohrofen, der auf einem Tieflader montiert ist, ein Zerhacker mit Aufgabeschleuse vorgeordnet sowie eine Kühlschnecke mit Wasserzugabe für die festen Produkte und eine ebenfalls verfahrbar ausgebildete Abgasbrennkammer für die gasförmigen Produkte nachgeordnet; ausserdem sind Schluck- und Kontrollbrunnen und/oder Berieselungseinrichtung vorgesehen, die im Falle des Einsatzes der Anlage über das Grundstück verteilt werden. Beide Anlagenteile sind wasser- und wärmeversorgungsmäßig miteinander verbunden und kombiniert, so daß der Betrieb beider Teile optimiert ist. Der Drehrohrofen und die Abgasbrennkammer sind verfahrbar und können daher von einem wieder nutzbar zu machenden Grundstück zum anderen transportiert oder auch auf dem Grundstück verfahren werden, um so jeweils den optimalen Standpunkt auch während der jeweiligen Wiedernutzbarmachungsmaßnahmen einnehmen zu können. Das Verbringen des stark kontaminierten Bodens ist somit auf kurze Wegstrecken beschränkt, was insbesondere bezüglich der Umweltbeeinträchtigung von Vorteil ist. Darüberhinaus können die für den Drehrohrofen und die Abgasbrennkammer aufzubringenden Investitionskosten auf verhältnismäßig einfache Art und Weise auf mehrere Projekte verteilt werden. Durch die Wasserversorgungs- und wärmetechnische Verbindung beider Anlagenteile ist es nicht nur möglich, der Installationsaufwand zu reduzieren, sondern gleichzeitig auch ein für die Belebung der Mikroorganismen optimale Wassertemperatur vorzuhalten. Das im Boden dann abgekühlte Wasser kann anschließend in optimaler Weise wieder für die Kühlung des den Drehrohrofen verlassenden, ehemals stark kontaminierten Bodens verwendet werden. Hierzu sind die Wasserversorgung- und -entsorgung der Kühlschnecke mit der der Kontrollbrunnen bzw. der Schluckbrunnen kombiniert, wobei jeweils rückspülbare Filter zwischengeschaltet sind, über die wirksam Verunreinigungen aus der Kühlschnecke oder aus dem Boden zurückgehalten werden können. Außerdem ist bei entsprechend ausgebildeten Filtern bereits eine Sauerstoffanreicherung zu erzielen, die die zusätzlichen Maßnahmen der Sauerstoffanreicherung entlasten.

Ein besonders wirksames Durchglühen der stark kontaminierten Bodenmassen ist erfindungsgemäß dadurch erreicht, daß der Drehrohrofen direkt beheizbar ausgebildet ist. Dabei können die im stark kontaminierten Boden vorhandenen Kohlenwasserstoffe wirksam verbrannt und unschädlich gemacht sowie feste Brennstoffe in Form von Schlammkohle mit eingesetzt werden. Über den Zusatz von Schlammkohle können die teilweise großen Unterschiede in der Zusammensetzung des stark kontaminierten Bodens wirksam ausgeglichen werden. Der Brennvorgang bzw. das Durchglühen der Bodenmassen wird zusätzlich dadurch vergleichmäßigt, daß der Drehrohrofen über seine Länge verteilt Lufteinlaßdüsen aufweist.

Um die in den Abgasen vorhandenen Schadstoffe wirksam unschädlich zu machen, ist es erforderlich, diese in einer Abgasbrennkammer nachzubehandeln. Die dort herrschenden hohen Temperaturen können für weitere Teilschritte des erfindungsgemäßen Verfahrens verwendbar gemacht werden, indem der Abgasbrennkammer ein Wärmetauscher nachgeordnet ist. Damit können die die Abgasbrennkammer verlassenden Abgase so weit gekühlt werden, daß sie ohne weiteres in die Atmosphäre abgegeben werden können, wobei die entnommene Wärme beispielsweise zum Aufwärmen des in die Schluckbrunnen geführten Wassers benutzt werden kann.

Da die Bodenverhältnisse über ein Grundstück variieren können, insbesondere bezüglich des Schluckvermögens des eingeleiteten Wassers, ist es zweckmäßig, den Schluckbrunnen jeweils ein oder mehrere Kontrollbrunnen zuzuordnen. Über diese Kontrollbrunnen kann kurzfristig und damit wirksam überprüft werden, ob das eingeleitete Wasser mit den zugegebenen Wachstumsfaktoren auch wirklich in die kontaminierten Bodenmassen eindringt. Ist dies nicht oder nicht mehr der Fall, kann so mit geeigneten Maßnahmen sofort entgegengewirkt und damit der Erfolg der Wiedernutzbarmachungsmaßnahmen gesichert werden.

Ebenfalls zur Sicherung der Wiederbelebungs- bzw. Wiedernutzbarmachungsmaßnahmen dient die erfindungsgemäße Ausbildung, nach der die Schluckbrunnen und/oder die Kontrollbrunnen mit einer längsverschieblich ausgebildeten Verrohrung ausgerüstet sind, die in Richtung Bohrlochtiefstes das Bohrloch abdichtend ausgebildet ist. Über diese Verrohrung kann das Wasser mit den Wachstumsfaktoren genau in die Bodenschichten eingeleitet werden, die nach den Vorerkundungsmaßnahmen mit Kohlenwasserstoffen o. a. Schadstoffen belastet sind. Weiter kann so während dieser Maßnahmen der Einleitungshorizont geändert und damit die Fließrichtung beeinflußt werden.

Die Erfindung zeichnet sich insbesondere dadurch aus, daß ein für die früher industriell genutzten Grundstücke geeignetes Verfahren und eine Anlage geschaffen ist, die den dort vorzufindenden Gegebenheiten mit konzentrierten teer- oder mineralölstämmigen Rückständen oder aber weit verteilten Verunreinigungen genügt. Es ist damit erstmals möglich, derartige Grundstücke in vertretbarer Zeit für Siedlungso. ä. Zwecke wieder zur Verfügung zu stellen. Dabei wird die Umwelt nicht oder nur so unwesentlich beeinträchtigt, daß das Verfahren und die erfindungsgemäße Anlage auch innerhalb dicht besiedelter Bereiche zum Einsatz kommen kann. Besonders vorteilhaft ist, daß das gesamte Verfahren auf dem wieder nutzbar zu machenden Grundstück abgewickelt werden kann, ohne daß ein Austausch von Bodenmassen notwendig wird. Dabei ist das Verfahren so ausgelegt, daß auch überbaute Bodenbereiche wirksam von Bodenverunreinigungen befreit werden können bzw. daß die Bodenreinigungsmaßnahmen auf die wirklich verunreinigten Bereiche begrenzt sind.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen

Fig. 1 eine Draufsicht auf ein unterschiedlich stark kontaminiertes Grundstück,

Fig. 2 eine schematisiert dargestellte Anlage zum Durchglühen kontaminierter Bodenmassen und

Fig. 3 einen Schnitt durch das in Fig. 1 dargestellte Grundstück mit eingebrachten Schluck- und Kontrollbrunnen.

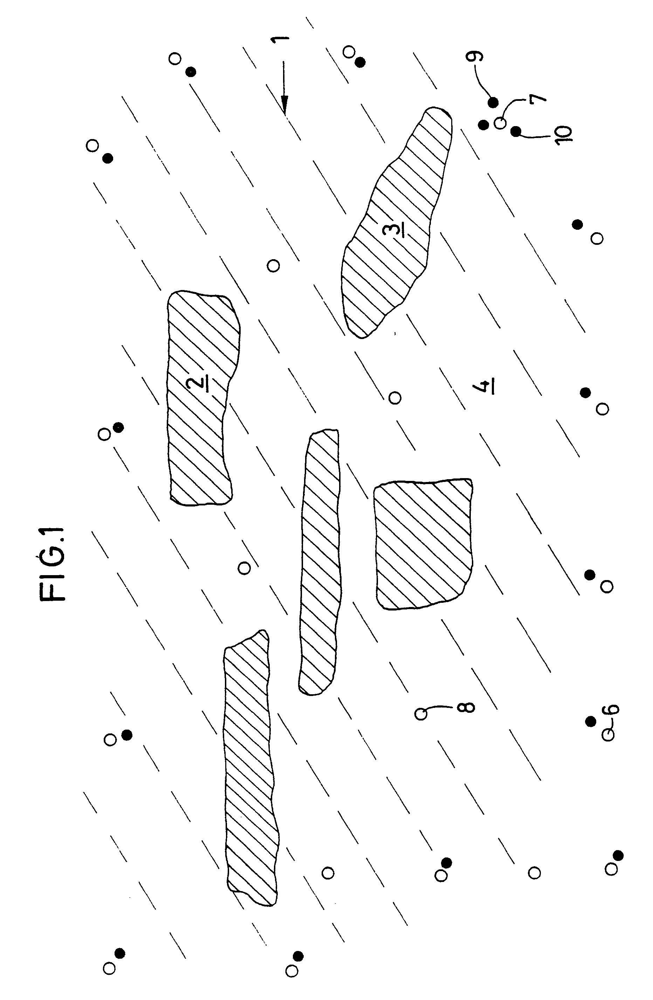

Bei dem in Fig. 1 schematisiert dargestellten Grundstück 1 sind die stark kontaminierten Bodenmassen mit 2 und 3 und die leichter kontaminierten Bodenmassen mit 4 gekennzeichnet. Dabei handelt es sich bei den stark kontaminierten Bodenmassen 2, 3 beispielsweise um teerhaltige Ablagerungen einer ehemaligen Kokerei, während die leicht kontaminierten Bodenmassen 4 dadurch entstanden sind, daß Kohlenwasserstoffe in Lösung gegangen und mit dem Niederschlagswasser in die Umgebung eindrungen sind.

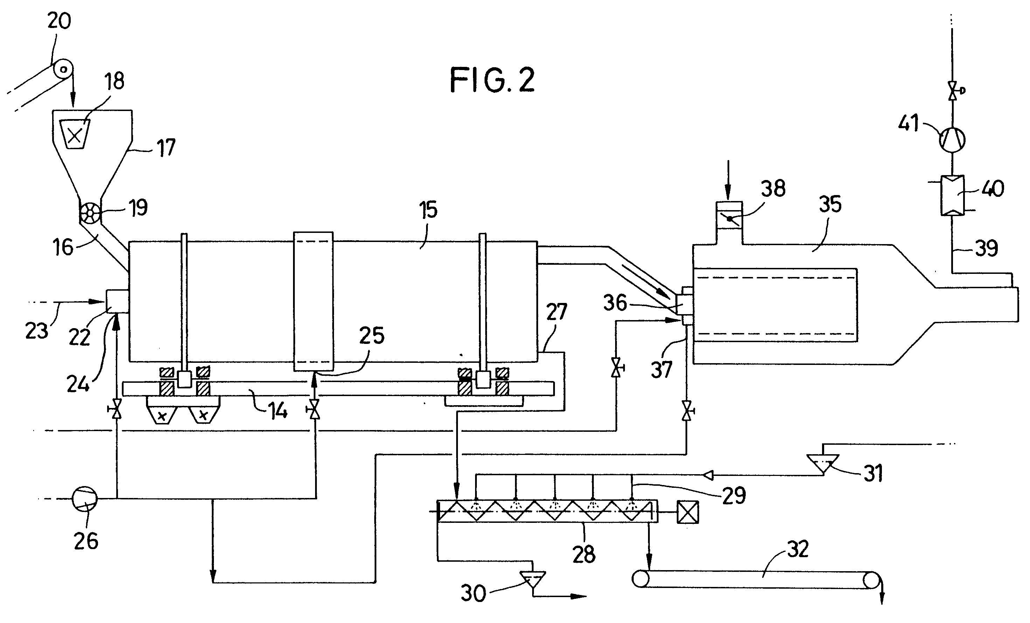

Bei der Wiedernutzbarmachung eines solchen Grundstückes 1 sind verteilt über das Grundstück Schluckbrunnen 6, 7, 8 und Kontrollbrunnen 9, 10 angeordnet worden. Die Kontrollbrunnen 9, 10 befinden sich vorzugsweise in der Nähe der Schluckbrunnen 6, 7, 8, um so das Eindringen des mit Wachstumsfaktoren angereicherten Wassers gezielt überprüfen und überwachen zu können. Die mit 2 und 3 gekennzeichneten stark kontaminierten Bodenmassen werden insgesamt ausgehoben und in der in Fig. 2 wiedergegebenen Anlage durchglüht und dann später wieder in das Grundstück 1 eingebracht. Die übrigen Bereiche mit den weniger stark kontaminierten Bodenmassen 4 werden über die Schluckbrunnen 6, 7, 8 mit Wasser durchspült, dem Wachstumsfaktoren, vorzugsweise Nitrat zugegeben ist, um die im Boden vorhandenen Mikroorganismen zu aktivieren, um so den Abbau der in Lösung gegangenen Kohlenwasserstoffe zu beschleunigen. Darüberhinaus können über die Schluckbrunnen 6, 7, 8 bzw. die Kontrollbrunnen 9, 10 Nester von Mikroorganismen in das Grundstück 1 eingeschleust werden, um so die Wiedernutzbarmachung gezielt zu beschleunigen.

Die stark kontaminierten Bodenmassen 2, 3 werden in dem auf einem Tieflader 14 montierten Drehrohrofen 15 zugeführt. Dieser Drehrohrofen 15 verfügt über eine Eingabe 16, der ein Bunker 17 mit einem Zerhacker 18 vorgeordnet ist. Über den Zerhacker 18 wird eine Vergleichmäßigung des Eingabegutes erreicht, das dann über die Aufgabeschleuse 19 kontinuierlich in den Drehrohrofen 15 eingegeben wird. Das Eingabegut besteht aus dem stark kontaminierten Boden, dem je nach Höhe der Verunreinigung angepaßte Mengen an Schlammkohle zugegeben werden. Beide Bestandteile gelangen dann über das Förderband 20 in den Bunker 17 bzw. in den Zerhacker 18. Hier erfolgt eine weitere Durchmischung, so daß das in den Drehrohrofen 15 gelangende Eingabegut für die direkte Beheizung ausreichend vergleichmäßigt ist.

Über den durch Flüssiggas 23 befeuerten Brenner 22 wird eine die Direktbeheizung ermöglichende Zünd- und Heizflamme erzeugt. Über die Lufteinlaßdüsen 24, 25, die über das Gebläse 26 beschickt werden, wird der Verbrennungsvorgang zusätzlich gesteuert, so daß am Auslaß 27 ein vollständig durchglühter praktisch toter Boden ausgetragen werden kann. Dieser Boden wird dann einer Kühlschnecke 28 zugeführt und über die Wasserzugabe 29 so weit abgekühlt, daß er über das Förderband 32 einer Zwischenlagerung oder aber direkt der Ablagerung zugeführt werden kann. Das benötigte Wasser bzw. das die Kühlschnecke 28 verlassende Wasser durchläuft Filter 30, 31, so daß es für weitere Zwecke anschließend wiederverwendbar bzw. so daß bereits für andere Zwecke verwendetes Wasser zu Kühlzwecken eingesetzt werden kann. Hierbei wird das von den Kontrollbrunnen 9, 10 kommende Wasser zunächst über den Filter 31 so gereinigt, daß es anschließend der Kühlschnecke 28 zugeführt werden kann. Da es durch den Boden abgekühlt ist, hat es nun eine für die Kühlzwecke vorteilhafte Temperatur. Das entsprechend aufgeheizte Restwasser wird dann über den Filter 30 von Verunreinigungen gereinigt und entweder direkt oder nach Zumischung von Wachstumsfaktoren den Schluckbrunnen 6, 7, 8 zugeführt. Es hat dann eine Temperatur, die gezielt so eingestellt werden kann oder eingestellt ist, daß das Wachstum der Mikroorganismen beschleunigt werden kann.

Das den Drehrohrofen 15 verlassende Abgas enthält Bestandteile, die in der Regel eine Nachverbrennung erfordern. Deshalb ist dem verfahrbar ausgebildeten Drehrohrofen 15 eine verfahrbar ausgebildete Abgasbrennkammer 35 zugeordnet. Drehrohrofen 15 und Abgasbrennkammer 35 verfügen dabei vorzugsweise über eigene fahrbare Untersätze, so daß sie getrennt transportiert oder aber auch hintereinandergeschaltet transportiert werden können. Bei der Abgasbrennkammer 35 ist auf die Darstellung des Transportteils verzichtet.

Die Abgasbrennkammer 35 verfügt über einen Gasbrenner 36 mit Lufteinlaßdüse 37 und über ein Regelventil 38, um bei Bedarf Kühlluft zuzuführen. Am hinteren Ende der Abgasbrennkammer 35 führt die Abgasleitung 39 zu einem Wärmetauscher 40, wo das Abgas auf eine den Abzug in die Atmosphäre nicht behindernde Temperatur gekühlt wird. Die im Wärmetauscher gewonnene Wärme wird zur Aufheizung des Berieselungswassers für die Schluckbrunnen 6, 7, 8 oder für andere Zwecke verwendet. Hinter dem Wärmetauscher 40 ist ein Absauggebläse 41 angeordnet, das aufgrund der reduzierten Abgastemperatur verhältnismäßig einfach dimensioniert bzw. ausgelegt werden kann.

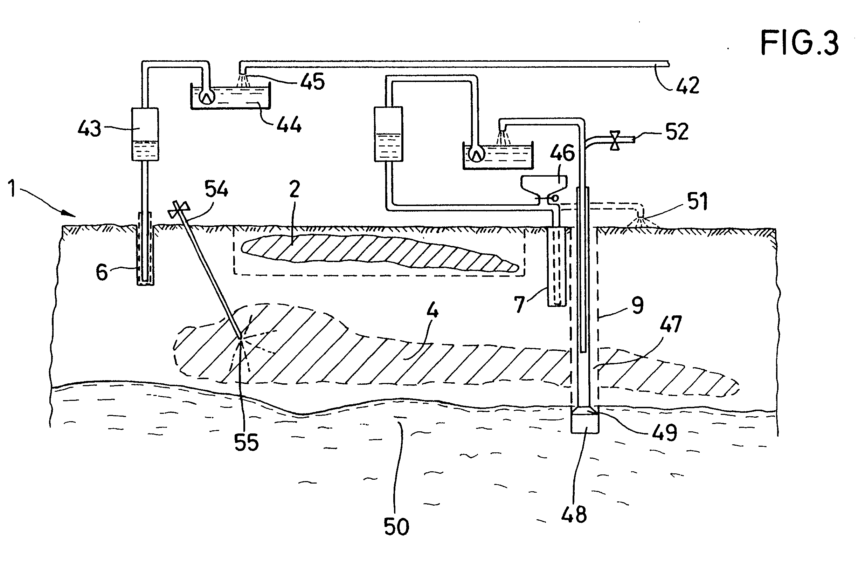

Das in Fig. 1 dargestellte Grundstück 1 ist in Fig. 3 im Schnitt gezeigt und zwar im Bereich der die weniger stark kontaminierten Bodenmassen reinigenden Anlageteile. Diese bestehen aus den Schluckbrunnen 6, 7 und den Kontrollbrunnen 9. Wie dargestellt wird das Wasser entweder über die Zuleitung 42 oder aber aus dem Kontrollbrunnen 9 aufgearbeitet und dann über die Schluckbrunnen 6, 7 den zu reinigenden, kontaminierten Bodenmassen 4 zugeführt. Die mit 2 bezeichneten stark kontaminierten Bodenmassen dagegen werden ausgehoben und wie weiter vorne beschrieben dem Drehrohrofen 15 zugeführt und dort ausgeglüht.

Vor der Einleitung des Wassers wird dieses im Schnellfilter 43 gereinigt, wobei durch das vorherige Durchlaufen der Wasserdüse 45 und des Zwischenbehälters 44 sowie des Schnellfilters 43 Methan, Eisen und Mangan entfernt werden. Auf die gleiche Art und Weise wird das aus den Kontrollbrunnen 9 geförderte Wasser wieder aufgearbeitet und bei Bedarf mit Nitrat aus dem Nitratbehälter 46 angereichert. Dadurch ist das infiltrierte Wasser bestens geeignet, um die im Boden vorhandenen oder in den Boden eingegebenen Mikroorganismen zum schnellen Wachstum zu veranlassen.

Zur Überwachung des Reinigungserfolges dieser mikrobiologischen Maßnahmen sind die Kontrollbrunnen 9 vorgesehen, die beispielsweise bis in die Grenzschicht 50 vorgetrieben sind. Bei dem in Fig. 3 wiedergegebenen Kontrollbrunnen 9 ist eine längsverschiebliche Verrohrung 47 mit das Bohrloch 48 im bestimmten Bereich abdichtenden Bohrlochdichtung 49 vorgesehen. Diese Verrohrung 47 soll im Prinzip in gleicher Art und Weise auch in den Schluckbrunnen 6, 7 zum Einsatz kommen, um so gezielt das mit Wachstumsfaktoren angereicherte Wasser in genau die Schichten einzuschleusen, die kontaminiert sind.

Außer der Möglichkeit der Einbringung des mit Wachstumsfaktoren angereicherten Wassers durch Schluckbrunnen besteht auch die Möglichkeit, über Verteilerdüsen 51 das entsprechend aufbereitete Wasser von oben her in den Boden eindringen zu lassen. Bei gut durchlässigen und insgesamt kontaminierten Bodenmassen ist eine solche Einbringung über die Verteilerdüsen 51 von Vorteil, wobei dann beispielsweise über die mit der längenveränderlichen Verrohrung 47 ausgerüsteten Kontrollbohrungen 9 das oben aufgegebene Wasser zu Kontroll- und Abführungszwecken aufgefangen und abgeleitet werden kann. Hierzu ist am oberen Ende ein verschließbarer Abzweig 52 vorgesehen.

Bei weniger gut das Wasser führenden Bodenschichten ist es weiter möglich, das mit Wachstumsfaktoren angereicherte Wasser durch gezielte Bohrungen genau in die Bereiche zu bringen, die kontaminiert sind und dann über Druck in diese Bereiche einzupressen. Hierzu kann beispielsweise die in Fig. 3 dargestellte Lanze 54 mit der Düse 55 verwendet werden.

## Patentansprüche

1. Verfahren zur Wiedernutzbarmachung von insbesondere ehemals industriell genutzten Grundstücken, deren Boden durch Ablagerungen, Betriebsunfälle oder sonstige Schadensfälle mit Kohlenwasserstoffverbindungen kontaminiert ist, wobei die kontaminierten Bodenmassen ausgehoben und die Umwelt nicht belastend verwertet werden, dadurch gekennzeichnet, daß die stark kontaminierten Bodenmassen zusammen mit noch vorhandenen Ablagerungen ausgehoben, am Ort bei Temperaturen von 600-800 °C durchglüht und dann abgekühlt, wieder eingebracht und rekultiviert werden und daß die Restkontaminationen und im Grundwasser gelösten Kohlenwasserstoffe am Ort verbleibend mit Wachstumsfaktoren kontaktiert werden, die Kohlenwasserstoffe abbauende Mikroorganismen zur Vermehrung anregen, wobei das zum Abkühlen der gebrannten Bodenmassen eingesetzte Kühlwasser nach Anreicherung mit Wachstumsfaktoren zur Beseitigung der Restkontaminationen verwendet wird.

2. Verfahren nach Anspruch 1, dadurch gekennzeichnet, daß die stark kontaminierten Bodenmassen mit Ballastkohle gemischt und dann durchglüht werden.

3. Verfahren nach Anspruch 1 und Anspruch 2, dadurch gekennzeichnet, daß die Bodenmassen vorzugsweise bei 700 °C durchglüht und die freigesetzten Rauchgase anschließend, vorzugsweise bei 1 200 °C nachverbrannt werden.

4. Verfahren nach Anspruch 1, dadurch gekennzeichnet, daß die durchglühten Bodenmassen abgekühlt und dann noch warm wieder eingebracht werden, wobei das durch das Durchglühen eingetretene Massendefizit mit Bergematerial ersetzt wird.

5. Verfahren nach Anspruch 4, dadurch gekennzeichnet, daß den durchglühten Bodenmassen beim Wiedereinbringen oder danach den Boden wiederbelebende Mikroorganismen zugegeben werden.

6. Verfahren nach Anspruch 1, dadurch gekennzeichnet, daß nach dem Ausheben der stark kontaminierten Bodenmassen in den übrigen kontaminierten Bodenmassen durch Berieseln, Verdüsen und/oder Einpressen von Wasser mit beigegebenen Wachstumsfaktoren eingabeseitig und kontrollseitig überwacht die Mineralisation der Kohlenwasserstoffe bewirkende Mikroorganismen belebt und gezüchtet werden.

7. Verfahren nach Anspruch 6, dadurch gekennzeichnet, daß die Mikroorganismen nesterweise in die kontaminierten Bodenmassen, vorzugsweise über Bohrungen eingebracht und dann aktiviert werden.

8. Verfahren nach Anspruch 6, dadurch gekennzeichnet, daß dem Wasser zusätzlich Sauerstoffträger, vorzugsweise Nitrat mit geringen Mengen Ammonium und Phosphat zugegeben werden.

9. Verfahren nach Anspruch 1 und Anspruch 6, dadurch gekennzeichnet, daß das benötigte Wasser jeweils auf einer gleichbleibenden Temperatur gehalten wird.

10. Anlage zur Wiedernutzbarmachung von mit Kohlenwasserstoffverbindungen verunreinigten Bodenmassen mit Hilfe des Verfahrens nach Anspruch 1 bis Anspruch 9, dadurch gekennzeichnet, daß einem Drehrohrofen (15), der auf einem Tieflader (14) montiert ist, ein Zerhacker (18) mit Aufgabeschleuse (19) vorgeordnet sowie eine Kühlschnecke (28) mit Wasserzugabe (29) für die festen Produkte une eine ebenfalls verfahrbar ausgebildete Abgasbrennkammer (35) für die gasförmigen Produkte nachgeordnet und daß Schluck- (6, 7, 8) und Kontrollbrunnen (9, 10) und/oder Berieselungseinrichtungen vorgesehen sind, wobei die Wasserversorgung und -entsorgung der Kühlschnecke (28) mit der der Kontrollbrunnen (9, 10) bzw. der Schluckbrunnen (6, 7, 8) kombiniert ist.

11. Anlage nach Anspruch 10, dadurch gekennzeichnet, daß zwischen die Wasserversorgung und -entsorgung der Kühlschnecke (28) und die Kontrollbrunnen (9, 10) bzw. die Schluckbrunnen (6, 7, 8) jeweils rückspülbare Filter (30, 31) geschaltet sind.

12. Anlage nach Anspruch 10, dadurch gekennzeichnet, daß der Drehrohrofen (15) direkt beheizbar ausgebildet ist.

13. Anlage nach Anspruch 10 und Anspruch 12, dadurch gekennzeichnet, daß der Drehrohrofen (15) über seine Länge verteilt Lulfteinlaßdüsen (24, 25) aufweist.

14. Anlage nach Anspruch 10, dadurch gekennzeichnet, daß der Abgasbrennkammer (35) ein Wärmetauscher (40) nachgeordnet ist.

15. Anlage nach Anspruch 10, dadurch gekennzeichnet, daß den Schluckbrunnen (6, 7, 8) jeweils ein oder mehrere Kontrollbrunnen (9, 10) zugeordnet sind.

16. Anlage nach Anspruch 10, dadurch gekennzeichnet, daß die Schluckbrunnen (6, 7, 8) und/oder die Kontrollbrunnen (9, 10) mit einer längsverschieblich ausgebildeten Verrohrung (47) ausgerüstet sind, die in Richtung Bohrlochtiefstes das Bohrloch (48) abdichtend ausgebildet sind.

## Claims

1. A method of rendering reusable plots of land which in particular have previously been industrially used, the soil of which is contaminated with hydrocarbon compounds by deposits, industrial accidents or other harmful incidents, wherein the contaminated soil masses are excavated and are exploited in a manner which does not harm the environment, characterized in that the highly contaminated soil masses together with still present deposits are excavated, are heated on the site at temperatures of 600-800 °C and then cooled, reintroduced and recultivated, and that the residual contaminations and hydrocarbons dissolved in the ground water are contracted, while remaining on the site, with growth factors which encourage multiplication of micro-organisms which decompose hydrocarbons, the cooling water used for cooling down the fired masses of soil being used, after enrichment with growth factors, for removing the residual contaminations.

2. A method according to Claim 1, characterized in that the highly contaminated soil masses are mixed with ballast coal and then heated to high temperature.

3. A method according to Claim 1 and Claim 2, characterized in that the soil masses are heated preferably to 700 °C and the released flue gases are then after-burnt, preferably at 1 200 °C.

4. A method according to Claim 1, characterized in that the soil masses heated to high temperature are cooled and then introduced again while still warm, the deficit of mass resulting from the heating being replaced by make-up material.

5. A method according to Claim 4, characterized in that microorganisms which reactivate the soil are added to the heated soil masses when they are reintroduced or afterwards.

6. A method according to Claim 1, characterized in that, after the excavation of the highly contaminated soil masses, in the remaining contaminated soil masses micro-organisms which cause the mineralization of the hydrocarbons are activated and bred, on the input side by sprinkling, jetting and/or injection of water with added growth factors and, on the monitoring side, by monitoring.

7. A method according to Claim 6, characterized in that the micro-organisms are introduced in the form of nests into the contaminated soil masses, preferably by boreholes, and are then activated.

8. A method according to Claim 6, characterized in that oxygen carriers, preferably nitrates with small quantities of ammonium and phosphate, are added additionally to the water.

9. A method according to Claim 1 and Claim 6, characterized in that the water required is held on each occassion at a constant temperature.

10. Apparatus for rendering reusable soil masses contaminated with hydrocarbon compounds, by means of the method according to Claims 1 to 9, characterized in that before a rotary kiln (15), which is mounted on a low-loader (14), a chopper (18) with feed lock (19) is disposed, and behind the rotary kiln a cooling screw (28) with water feed (29) for the solid products and a waste gas combustion chamber (35), also constructed to be mobile, for the gaseous products are disposed, and that injection wells (6, 7, 8) and monitoring wells (9, 10) and/or sprinkling devices are provided, the water supply and discharge of the cooling screw (28) being combined with those of the monitoring wells (9, 10) and of the injection wells (6, 7, 8) respectively.

11. Apparatus according to Claim 10, characterized in that, between the water supply and discharge of the cooling screw (28) and the monitoring wells (9, 10) and injection wells (6, 7, 8), back-washable filters (30, 31) are incorporated.

12. Apparatus according to Claim 10, characterized in that the rotary kiln (15) is constructed to be directly heated.

13. Apparatus according to Claim 10 and Claim 12, characterized in that the rotary kiln (15) possesses air inlet nozzles (24, 25) distributed over its length.

14. Apparatus according to Claim 10, characterized in that a heat exchanger (40) is disposed behind the waste gas combustion chamber (35).

15. Apparatus according to Claim 10, characterized in that one or more monitoring wells (9, 10) are associated with each of the injection wells (6, 7, 8).

16. Apparatus according to Claim 10, characterized in that the injection wells (6, 7, 8) and/or the monitoring wells (9, 10) are equipped with a longitudinally displaceable well casing (47), which is constructed to seal the borehole (48) in the direction of its greatest depth.

## Revendications

1. Procédé pour rendre réutilisables des terrains industriellement exploités, notamment autrefois, dont le sol est contaminé par des composés hydrocarbonés à la suite de dépôts, d'accidents de fonctionnement ou d'autres sinistres, les masses de sol contaminées étant enlevées et le milieu environnant étant mis en valeur d'une manière non polluante, caractérisé en ce que les masses de sol fortement contaminées sont enlevées conjointement aux dépôts encore présents, sont, sur place, cuites à fond à des températures de 600 à 800 °C et ensuite refroidies, et sont réintroduites et remises en culture et en ce que les contaminations résiduaires et les hydrocarbures dissous dans les eaux souterraines sont, en restant en place, mis en contact avec des facteurs de croissance qui stimulent la multiplication de micro-organismes dégradant des hydrocarbures, l'eau de refroidissement mise en œuvre pour refroidir les masses de sol calcinées étant, après enrichissement en facteurs de croissance, utilisée pour supprimer les contaminations résiduaires.

2. Procédé suivant la revendication 1, caractérisé en ce que les masses de sol fortement contaminées sont mélangées à du combustible secondaire et sont ensuite cuites à fond.

3. Procédé selon l'une des revendications 1 et 2, caractérisé en ce que les masses de sol sont cuites à fond de préférence à 700 °C et en ce que les gaz de fumée libérés sont ensuite brûlés de préférence à 1 200 °C.

4. Procédé suivant la revendication 1, caractérisé en ce que les masses de sol cuites à fond sont refroidies et ensuite réintroduites à l'état encore chaud, le déficit de masse produit par la cuisson étant remplacé par de la matière de mine.

5. Procédé suivant la revendication 4, caractérisé en ce qu'on ajoute aux masses de sol cuites à fond des micro-organismes revivifiant le sol au cours de la réintroduction ou ensuite.

6. Procédé suivant la revendication 1, caractérisé en ce que, après l'enlèvement des masses de sol fortement contaminées, des micro-organismes produisant la minéralisation des hydrocarbures sont activés et cultivés dans les autres masses de sol contaminées d'une manière surveillée du côté entrée et du côté contrôle, par arrosage, atomisation et/ou nettoyage à l'aide d'eau pourvue de facteurs de croissance ajoutés.

7. Procédé suivant la revendication 6, caractérisé en ce que les micro-organismes sont introduits par nids dans les masses de sol contaminées, de préférence par l'intermédiaire de forages, et en ce qu'ils sont ensuite activés.

8. Procédé suivant la revendication 6, caractérisé en ce qu'on ajoute en supplément à l'eau un véhicule d'oxygène, de préférence du nitrate, avec de faibles quantités d'ammonium et de phosphate.

9. Procédé suivant l'une des revendications 1 et 6, caractérisé en ce que l'eau nécessaire est respectivement maintenue à une température constante.

10. Installation pour rendre réutilisables des masses de sol contaminées par des composés hydrocarbonés, à l'aide du procédé suivant l'une des revendications 1 à 9, caractérisée en ce qu'un concasseur (18) pourvu d'une écluse d'alimentation (19) est agencé en amont d'un four tubulaire rotatif (15), qui est monté sur une plate-forme surbaissée (14), en ce qu'en aval de ce four sont agencées une vis sans fin de refroidissement (28) à amenée d'eau (29) pour les produits solides et une chambre de combustion des gaz d'échappement (35), réalisée également sous forme déplaçable, pour les produits gazeux, et en ce que des puits d'absorption (6, 7, 8) et des puits de contrôle (9, 10) et/ou des dispositifs d'arrosage sont prévus, l'alimentation et l'évacuation de l'eau de la vis de refroidissement (28) étant combinées avec celles des puits de contrôle (9, 10) et respectivement des puits d'absorption (6, 7, 8).

11. Installation suivant la revendication 10, caractérisée en ce que des filtres (30, 31) rinçables en contre-courant sont montés entre l'alimentation et l'évacuation d'eau de la vis de refroidissement (28) et les puits de contrôle (9, 10) et respectivement les puits d'absorption (6, 7, 8).

12. Installation suivant la revendication 10, caractérisée en ce que le four tubulaire rotatif (15) est réalisé sous une forme directement chauffable.

13. Installation suivant l'une des revendications 10 et 12, caractérisée en ce que le four tubulaire rotatif (15) présente des tuyères d'injection d'air (24, 25) réparties sur sa longueur.

14. Installation suivant la revendication 10, caractérisée en ce qu'un échangeur de chaleur (40) est monté en aval de la chambre de combustion des gaz d'échappement (35).

15. Installation suivant la revendication 10, caractérisée en ce qu'un ou plusieurs puits de contrôle (9, 10) sont adjoints à chacun des puits d'absorption (6, 7, 8).

16. Installation suivant la revendication 10, caractérisée en ce que les puits d'absorption (6, 7, 8) et/ou les puits de contrôle (9, 10) sont équipés d'un tubage (47) qui est réalisé sous une forme déplaçable longitudinalement et qui est conformé de manière à étanchéifier le trou de forage (48) en direction de sa partie la plus profonde.

# FIG.1

EP 0 170 862 B1

# FIG. 2

EP 0 170 862 B1

FIG.3